# EUROPEAN PATENT APPLICATION

(11) **EP 4 039 458 A1**
(43) Date of publication of application: **10.08.2022**
(21) Application number: 20806172.1
(22) Date of filing: 07.05.2020
(51) Int. Cl.: B31B 70/64, B29C 65/00, B65D 30/02, B65D 30/22, B65B 51/00

(54) **CONTINUOUS SEALING MACHINE FOR TWO PLASTIC FILMS**

(30) Priority: 13.05.2019 CO 19004838
(71) Applicant: Char Abdala, Maria Inmaculada, Barranquilla (CO); Manotas Char, David Emanuel, Barranquilla (CO)
(72) Inventor: Char Abdala, Maria Inmaculada, Barranquilla (CO); Manotas Char, David Emanuel, Barranquilla (CO)
(74) Representative: Sach, Greg Robert
(86) International application number: PCT/IB2020/054303
(87) International publication number: WO 2020/229954

(57) **Abstract**

The invention relates to a continuous sealing machine for two plastic films which continuously seals two films, a tubular one with bellows and a plastic sheet, folds the bellows of the new compartment, obtaining as a result rolls with two compartments, both of which have bellows. This high-performance machine provides the means for modernising the plastic industry with eco-friendly productions reducing the use of plastic, with high performance and efficiency.

## Description

### 1.1. TECHNOLOGY SECTOR:

This invention is related to the plastic industry machines, including extruders, printers, trimming machines, raw material mixers and plate mounting machines, and is specifically related to senators.

### 1.11. STATE OF THE ART / PREVIOUS TECHNOLOGY:

The machines of the plastic industry have become more efficient, have achieved better performance and precision. These features have made significant strides.

However, the plastic industry, like many, requires constant innovation, especially when it is in a crisis due to the growing environmental trend and it is urgently sought to reduce the consumption of plastic.

The plastic industry is going through a moment of unpopularity due to environmental trends that have denounced the productions of the plastic industry as the greatest factor of pollution. The current plastic industry manufactures two-track rolls, thus in extrusion, printing and in the sealing area it achieves more efficient productions. Productivity is very important, so the machines have improved their efficiency with two-lane productions. Thus, the machines of the plastic industry, have similarities with the continuous sealing machine in some points, however this machine is completely different insofar as it seals two films, a tubular with bellows and a plastic sheet in one or two lanes which allows ecological productions and as a result two compartment rolls are obtained.

The machines mentioned below are part of the plastic industry, are part of the state of the art and have some medium similarities with the continuous sealing machine for two plastic films. • Machine for the sealing section that divides a film into two films, seals them longitudinally and inserts the bellows.

This first machine is part of the sealing section and adds efficiency to the other sections, it allows the sealing machines to make the bags in two tracks. Similar to the continuous sealing machine for two plastic films, its job consists of dividing a tube twice the width with a hot knife and sealing it at the same time to obtain two tubes. The sealant is a wide blade without movement. Use an unwinder for a film twice the width. The two plastic film continuous sealing machine does not split the films but seals two films. The senators it uses are moving wheels. It uses two unwinders.

There are multiple differences of this machine, with the continuous sealing machine, the first of which is that it uses a single unwinder that is for rolls twice the width. Divides the film and seals it lengthwise; with air guns, the shape of a balloon is created in both tubulars to introduce the bellows. This machine is used in line with the sealing machine that makes the bags. It allows tubulars twice the width to be manufactured in the extrusion section. Likewise, the tubulars twice the width are printed in the printing section. In the sealing section, it divides the tubular into two tubulars, it introduces the bellows and allows the making of bags in two tracks. The first two plastic film continuous sealing machine uses two unwinders for two films. Second, it does not split the films longitudinally seals the two films on both sides. Third, it does not inflate the balloons to form the bellows, it uses a bellows former after sealing the films that on the one hand protects the bellows from the original tubular and on the other hand introduces the bellows of the second compartment. Fourth, it produces rolls of two compartments with bellows. The machine that was described above does not produce rolls. It works in line with the sealing machine for making the bags in two tracks. Fifth, in terms of efficiency, the continuous sealing machine of two plastic films produces the rolls of two compartments in one or two tracks, improving the efficiency of the sections and in this way shares this characteristic as the machine that was previously described.

### • Trimming machine

In the market, there are machines that continuously trim the sheets to achieve exact widths in the trimmed sheets as similar to the continuous sealing machine for two plastic films, its work is continuous, the continuous sealing machine for two plastic films does not trim the sheets. films seals two films continuously. Trimming machines usually have an unwinder and a winder. The two plastic film continuous sealing machine has two unwinders and because the winders work with clutches it has two winders when one works, the other rests, because motors with clutches tend to overheat.

### Filling machine

In the market, we can also find another machine that has some similarities, such is the filling machine that is used for the packaging of grains and cereals, in whose original design uses a device that gives the shape of a tube to a sheet, placing one of its edges on the other to seal them longitudinally, the type of sealing is discontinuous since the tubular stops for filling. The fill gate opens and when it reaches the fill weight it closes, seals at the top and cuts and seals the tubular below for the next fill.

The continuous sealing machine for two plastic films has many differences with the filling machine. First, seal two films a foil and a tubular with bellows. Second, as the sheet is wider than the tubular, the device gives the sheet the shape of an arc, so the edges of the sheet and those of the tubular coincide on both sides for the continuous sealing of the two films. Third, the senators advance at the same speed as the films, the sealing is continuous. Fourth, it has two unwinders, while the filling machine uses only one unwinder.

### 1.111. DESCRIPTION OF THE INVENTION:

The Continuous Plastic Film Sealing Machine seals two films, a sheet and a tubular with bellows, on both sides, with high performance characteristics, high speeds, yields and efficiency, it performs the production of two-compartment tubulars with bellows .

The invention consists of a machine on a main structure consisting of: unwinders, rocker arms, edge aligners, pulling roller systems, antistatic bars, special device, motors with coupled gearbox, automatic brakes, electromagnetic clutches, continuous senders, trainer of bellows, senators camshaft, front pulling roller stepper motor, winder bars, foil positioning system.

For your understanding, here is a general description of the operation of the machine. In the upper unwinder (1) the foil film reel is placed and in the lower unwinder (2) the tubular film reel with bellows. The sheet film enters through a system of pulling rollers (7) and likewise the tubular film with bellows through a second system of pulling rollers (8). To avoid negative factors during sealing, the unwinders have been decoupled from the main structure, since the unwinders use an edge alignment system that produces transversal movements on the unwinding bars to correct the alignment of the films, both unwinders have this system that produces vibrations . In the main structure of the machine (33) there is a special device (37) that forms an arc to a sheet placing its edges on the edges of the tubular with bellows. The device has three segments, the first segment (12) guides the sheet while making it form an arc. The second segment (15) is a stainless steel arched tunnel with flat flaps and sealing windows that has continuous sensors (16) and (17) for sealing the films. Finally, the third element forms the bellows of the new compartment. The films advance, the sheet film above the device and the bellows tubular film below the device. At the front in the main structure of the machine is a system of front pulling rollers (22), this system of pulling rollers keeps the tension of the films constant for good operation during sealing. At the end of the structure the constant tension winders with clutch (32) are located. Clutch winders tend to overheat, so two winders are used, one works while the other rests and thus we ensure the availability and performance of the machine.

### I.IV. DETAILED DESCRIPTION OF THE INVENTION:

In the plastic industry there are three sections: extrusion, printing and sealing. The continuous sealing machine for two plastic films makes the union of a tubular with bellows and a plastic sheet. The two rolls are produced in the extrusion section, one of the two rolls is printed in the printing section. The continuous sealing machine for two plastic films joins the two films, the tubular and the sheet, and as a result provides us with a double tubular, both compartments with bellows.

The machine has the following characteristics:
- Industrial performance
- Accuracy
- High Speeds
- Availability: 24 hours as it has two constant tension winding motors with electromagnetic clutches. • Speed: 180 to 220 meters per minute.
- Performance: The production capacity is determined by the speed of the machine and the specifications of the packaging. A roll of 120 kg, at 180 meters per minute: 13.32 minutes. A 120 kg roll, at 220 meters per minute: 10.9 minutes.
- Quality monitoring: Detection of films during the sealing process, measurement of senator temperatures, edge alignment system, foil positioning rollers. These characteristics of the machine guarantee the sealing of the films or stop the machine and notify the operator.

The following correspond to the high performance characteristics of the machine:
- Edge alignment system
- Antistatic bars
- Senators camshaft
- Front pulling rollers stepper motor
- Sheet positioning system
- Automatic brakes
- Electromagnetic clutches

Safety and operation:
- Safety guards, wheel damping, machine anchors, emergency stops, electrical safety, low noise and low vibration systems, finishes, paint, signs, warnings.
- Manuals and the spare parts box.

### I.IV.I. PARTS OF THE MACHINE

We will go on to explain what are the parts that make up the machine in order to detail its operation:
Machine structure (33)
It is made up of two parts. The structure of the unwinders decoupled from the main frame and the main frame with the supports for the parts.
Unwinder bars (1) and (2)

The unwinding bars are steel bars, they have a toothed wheel at one end to engage the magnetic brakes. They have cast iron stops with a threaded safety pin that adjusts to secure the coils to the bar. The unwinder has at its other end a bushing divided in two with a safety lock to hold the bar.

Constant tension unwinders (1) and (2) with rocker controlled brake.

The unwinders will be decoupled from the main structure so that the vibration does not affect the senators or the subsequent stages, sheet positioning rollers, bellows former.

The foil reel is placed on the constant tension unwinder with rocker controlled brake located at the top. The bellows tubular spool is placed in the brake constant tension unwind located at the bottom. The rocker (3) and (4) guarantees a tension constant in the films in such a way that if the tension decreases the brake on the coil is activated and if the tension increases the brake coil is released and thus the rocker continuously regulates the tension.

### Edge alignment system on the unwinder bars

For continuous work, an edge aligner is placed that moves the bar on which the coil or roll of film is located.

The mobile bed has a roller at the height of the rollers on the upper plane of the rocker, which moves with the bed. Just before this roller, the edge alignment sensors are located, in the structure where the mobile bed is located. The sensors do not move with the bench.

The sensor uses a reference to move the bed to the right or left to perform the alignment correction and thus ensure that the edges of the sheet and the tubular coincide at the time of being sealed. Edge alignment sensors are located on the same side on both films. The edge alignment correction is made on benches that support the unwind bars through transverse movements to the side that is required by means of a double-turn motor and an auger attached to the bed to permanently center both films.

### Input feed pulling roller system (7) and (8)

Both films pass independently through feed pulling rollers. These rollers have on the outside a layer of vulcanized rubber to continuously drag the films.

### Mechanism of sprockets (9) and (10) and chain with motor (11)

The films must maintain a constant linear speed that must be the same in both to guarantee sealing, to ensure this both systems of feed pulling rollers will be linked together by means of a chain and pinion mechanism and the traction will be received from a single motor. with independent speed control.

### Antistatic bars

Electrode bars or antistatic bars are located at the entrance of the films. Anti-static bars incorporate an inductive coupling that achieves static neutralization. Operating voltage: 7000 V. Stainless steel emitters on insulating material.

The antistatic bars eliminate the static electricity of the materials since they produce positive and negative ions that neutralize those that the material to deionize has.

The static-free material is deployed on the surface of the special device.

### Special Device (37)

It is a device specially designed to condition the films so that their edges coincide at the moment of being sealed and for the behavior of the cold sheet for the folding of the bellows. Its location is from the upper input pull rollers to the front pull rollers.

The sheet is wider than the tubular, as its edges must coincide for sealing, the device is responsible for raising the sheet to an arched tunnel and in this way the edges coincide.

It is made up of three segments: First segment of the special device, this segment drives the sheet while giving it the shape of an arc or input element of the device (12).

Second segment of the special device is a stainless steel arched tunnel with flat flaps and sealing windows or central element of the device (15).

Third segment of the special device is the element where the bellows of the new compartment or bellows former are formed.

### Device input element (12)

The first element of the device receives the sheet from the feed rollers of the machine and places it on the tunnel. It receives the flat sheet, at the same level as the tubular, and makes it rise to the height of the tunnel. The purpose of this segment of the device is to take the flat sheet as wide as it is and guide it while making it take the shape of an arc so that in this transition the edges of the sheet come closer to those of the tubular. When reaching the height of the tunnel at the lower ends of the same, the edges of the sheet coincide with those of the tubular.

### Stainless steel arch tunnel with flat ailerons and sealing windows (15)

The second element of the device is in the form of a tunnel over which the sheet is located. Below said tunnel is the bellows tubular, both films advancing at the same speed. The purpose of this segment of the device is to seal the two films on both sides in the sealing windows.

### Bellows former

Now the sheet must descend to the same level as the tubular and coincide with its same width, this because now it will have bellows. This part of the device is made up of an inner part and an outer part. The inner part of the bellows former guarantees the exact shape of the new compartment and ensures that when the bellows are formed, the pressure on the films does not deform the original tubular. It does this in the following way: inside the new compartment, it creates through two metal frames the form of expanded compartment necessary for the bellows to be inserted into the new compartment. The outer part uses the external accessories of the bellows former (20) and (21) by means of which it introduces the bellows in the new compartment.

### Rectangular metal frame

At the bottom, the bellows former has a rectangular metal frame in contact with the upper face of the original tubular, which keeps it in place during the process of forming the new bellows in which pressure is exerted on it.

### Trapezoidal metal frame

From the top of the tunnel to the exit of the same, the bellows former has a trapezoidal metal frame downward in such a way that the film makes the natural transition from the top of the tunnel to the bottom of the device where the original tubular is located..

### Bellows former external accessories (20) and (21)

On the outside of the film, between the two metal frames, on each side the bellows are introduced through the external accessories of the bellows former which consist of two pieces of wood that push the material in, similar to those used conventionally. These pieces of wood do not produce splinters and have a polished finish.

### Sheet positioning rollers (13) and (14)

The sheet positioning rollers located at the lower ends of the arched tunnel rotate outwards with independent motors and guarantee the position of the sheet.

### Two speed motors for sheet positioning rollers

To ensure that the new two compartment film is completely sealed, two speed motors are available for the film positioning rollers.

Film detection is performed with capacitive sensors.

Capacitive sensors are lined up in threes.

Capacitive sensors measure capacitance, as the film is an insulating material, the capacitance increases with the film so capacitive sensors detect the film.
0.4 = diameter of each sensor
0.8 = wheel seal width

There are three sensors on each side, two sensors match the sealing width. The outermost sensor or third sensor detects the film on one side and activates the second speed on the roller motor on the opposite side.

The second speed or increase in speed produces a continuous pull of the films. Thus the ratio Area Increase in Speed Friction is equivalent to the correction displacement. The edges should be sealed on both sides. This way the speed increase will always be applied to one of the sides. The film is constantly moving and the seal is guaranteed.

### Continuous Sealing System

The continuous sealing system is who performs the sealing of the films. It fulfills the function of sealing the edges of the sheet and the tubular with bellows on both sides. Its main component is the sender wheels (16) and (17) that are located in the sealing windows. The continuous sealing system is made up of:
Bronze sealing wheels (16) and (17) with resistors
Thermocouple and electric thermostat
Commutator and brush system (29) and (30)
Shaft (34) and (35) and support (27) and (28) of the sealing wheels
Non-stick Teflon Tape
Damping system of the sealing wheels
Seal Wheel Pulleys (18) AND (19)
Camshaft sealing wheels
Bases of senators and tubular guides Bronze senator wheels (16) and (17) with resistors

The sealant is a high relief cross hatch bronze wheel that provides a security seal. It rotates on an axis (34) and (35), the resistors are cylindrical and are located in the center or core of the wheel where the holes for the resistors have been made.

### Thermocouple and electric thermostat

The temperature is adjustable and is controlled through the reading of a thermocouple housed in the center of the wheel by means of an electric thermostat. There are two thermocouples, one on each wheel and two thermostats to control the temperature of each wheel. If the temperature rises in the wheels, the thermostat de-energizes the resistances and if it drops it energizes turning on the resistances, thus maintaining the average sealing temperature.

### Commutator and brush system (29) and (30)

A commutator and brush system provides power to the resistors. The collector rotates with the wheels and has conductive tracks that transmit electricity. The carbon brushes remain static on the collector tracks and thus transmit the electricity to the collectors who in turn transmit the electricity to the resistors.

### Axle (34) and (35) and support (27) and (28) of the sender wheels

As support for the sender wheels, a shaft (34) and (35) is used which supports the sealing wheel (16) and (17) and rotates with the sealing wheel. It has three main parts. The first one is to hold the sealing wheel, the second part carries inside the resistor cables that are connected to the collector that rotates together with the shaft. The third part is to support the sealing wheel pulley (18) and (19) from where the wheels receive traction. The shaft is attached to a support (20) and (21) with a bearing that functions as a support for the parts. The support is an arm that has a pivot point, its second function is to raise the wheels by action of the camshaft.

### Non-stick Teflon Tape

Senator wheels use non-stick Teflon tape to achieve controlled parameters of temperature, pressure, sealing time, during senator operation. The Teflon tape is non-stick and thus does not allow the films to stick to the senators, in this way it achieves stable parameters and continuous work.

### Sender wheel damping system

Sender wheels use compression springs to ensure contact with films at high speeds. The springs are located on the arm or support of the sender wheels and act in the two positions of the wheel, in contact with the films and in a raised position.

### Sender wheel pulleys (18) and (19)

The speed of the sender wheels must be identical to that of the films or they will tear in contact with the wheels at high temperatures. This is accomplished using pulleys that are pulled by the feed pulling rollers. The pulleys must be of the same dimension on the wheels and on the feed rollers, two pulleys, one on each wheel and two pulleys on one of the feed rollers, one on each side, connected with elastic bands of circular cross section.

### Sender wheels camshaft

It has two positions. The raised position raises the sealing wheel.

When the cam is in the second position the wheel comes into contact with the films.

### Senators bases and tubular guides

As bases for sealing the films, flat rectangular pieces are used, one on each side of the films that are placed between the folds of the bellows of the original tubular. This, in addition to providing support to the senators, prevents the upper fold from being sealed with the lower one of the bellows of said tubular, which would spoil this compartment. In addition, it serves as a guide to ensure the correct position of the original tubular. These pieces are made of aluminum of a suitable thickness and with rounded edges so that they do not heat up and to improve the conditions of movement of the tubular film.

### Front Pulling Roller System (22)

At the exit of the special device the front pulling roller system advances at the same speed as the input rollers and maintains the tension of the two compartment film.

### Front Pulling Roller System Stepper Motor (23)

The front pulling roller system advances at the same speed as the input rollers and maintains the tension of the films. If this does not happen, the films suffer a shift to the right or to the left, making the sealing on one side defective.

The stepping motor allows the front pulling roller system to advance in degrees while maintaining film speed and performs tension correction. If the voltage decreases, the current intensity also decreases in the motor supply.

To perform the voltage correction, the stepping motor is advanced a few degrees. As the voltage increases, the current intensity increases, making the respective correction.

### Two constant tension winders with clutch (32)

When one motor works, the other rests, which allows the constant work of the machine 24 hours a day, every day of the year. The electromagnetic clutch couples the motor to the load. As long as the field assembly is fixed and is prevented from rotating, the rotor assembly is secured. When the coil is energized the armature positively connects the motor to the load. Thus driving the load in high, medium and low speed.

### TWO TRACK CONTINUOUS SEALING MACHINE

For the start-up within the industry we must consider that the efficiency of the sections is an essential condition that leads us to the two-track machine. The Continuous Sealing Machine for two two-track Plastic Films uses two modules, one for blowing the balloons to shape the new bellows and one for trimming to divide the sheet.

The first module divides the tubular with a hot blade and seals it longitudinally, uses an arched support that contributes by rapidly cooling the films, fills the two tubulars with air with air guns, and forms the bellows of the two tubulars. In the bellows forming tower, the upper pulling rollers ensure that the air does not escape from the balloons. The upper pulling rollers have louvers that do not allow the balloons to move from their position for the formation of the bellows. The pieces of wood introduce the bellows. The blinds guarantee symmetries.

The second trimming module divides the sheet in two with a cold blade. The positions of the two modules are described below. The balloon inflation module is located at the back of the machine and the tubular films use guide rollers for their location on the rocker arms. The sheet trimming module is located in the original position of the machine in the upper unwinder. The two bellows tubular films must be centered, using two rotating guide rollers, mounted in such a way that they receive the films and project them outwards to obtain the displacement.

The bellows foil and tubular films then enter the rocker arms independently. The work of the rocker arms is very important since the input voltage must be the same in both tracks. Then the independent rocker arms, two for each track, achieve the tensions. The infeed pulling rollers with their motorized chain and sprocket system feed the films on both sides. Then two special function devices, one for each track, place the edges of the foil films on the edges of the bellows tubular films. Both special function devices with their senator wheels, senator bases and foil positioning rollers. Front split pulling rollers independently maintain film tension. The winders, one on each side with their electromagnetic clutches, make up the two-compartment rolls.

### PRINTING ON BOTH SIDES

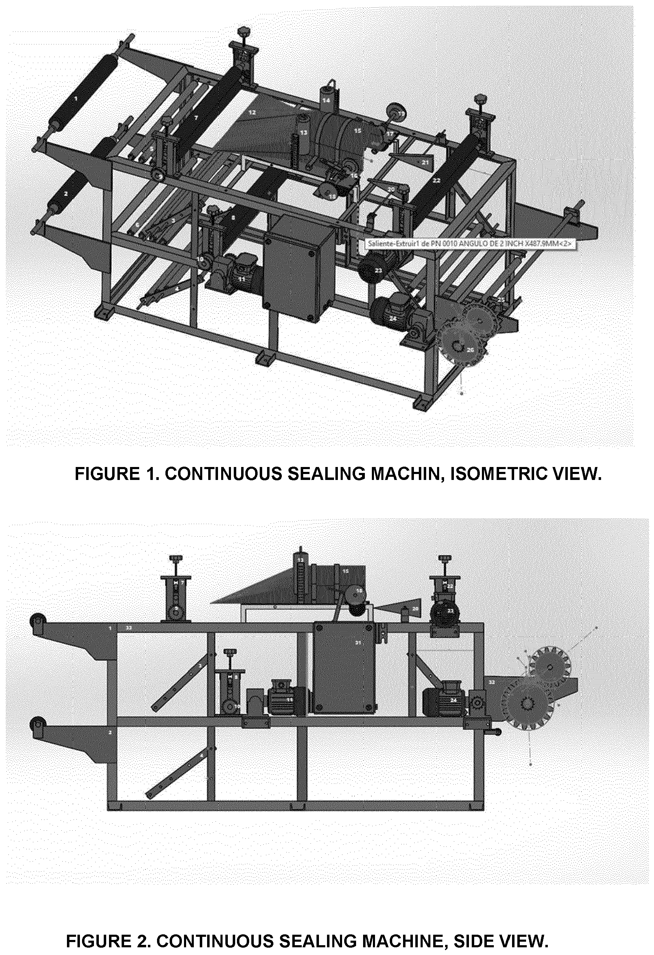

The films, tubular with gussets and foil are now printed on one side with the supermarket logo and the other with the recycle logo. Both prints have the print bar used by optical readers in sealing. Our machine has to match the labels so that both prints are centered. For which it uses a mobile roller within a four-roller assembly, one of the rollers moves in the direction of the films, increasing or decreasing the path and thus locating the labels of both prints, a servomotor is used to adjust the position of the mobile roller. and optical readers that locate the tags. FIGURE 1. CONTINUOUS SEALING MACHINE ISOMETRIC VIEW. The figure shows the continuous sealing machine, it has two unwinding bars at the entrance (1) and (2), the three guide rollers (5) and (6) of the upper plane act with the three rollers of the rocker (3) and (4), the two systems of vulcanized rubber pulling rollers pull at the entrance (7) and (8). The part that is presented in the central part of the machine is the special function device, it has three segments, in the central segment (15) there are two sender wheels (16) and (17), mounted on shafts with supports and pulleys transmission (18) and (19). The third segment shows the external accessories of the bellows former (20) and (21). The front pulling rollers (22) are attached to a motor (23). The motor of the winders (24) with clutch (26) transmits the movement to the winder bar.

FIGURE 2. CONTINUOUS SEALING MACHINE SIDE VIEW. The figure shows the main structure (33) of the machine, the unwinder benches (1) and (2), the rocker arms (3) and (4), the input pulling rollers (7) and (8), sprocket and chain mechanism (9) and (10) with motor (11), electrical box (31), special function device (15), front pulling rollers (22), pulling roller motor front (23). In the upper part, the foil positioning rollers (13) and (14), the pulleys of the sealing wheels (18) and (19), the external accessories of the bellows former (20) and (21) are observed.

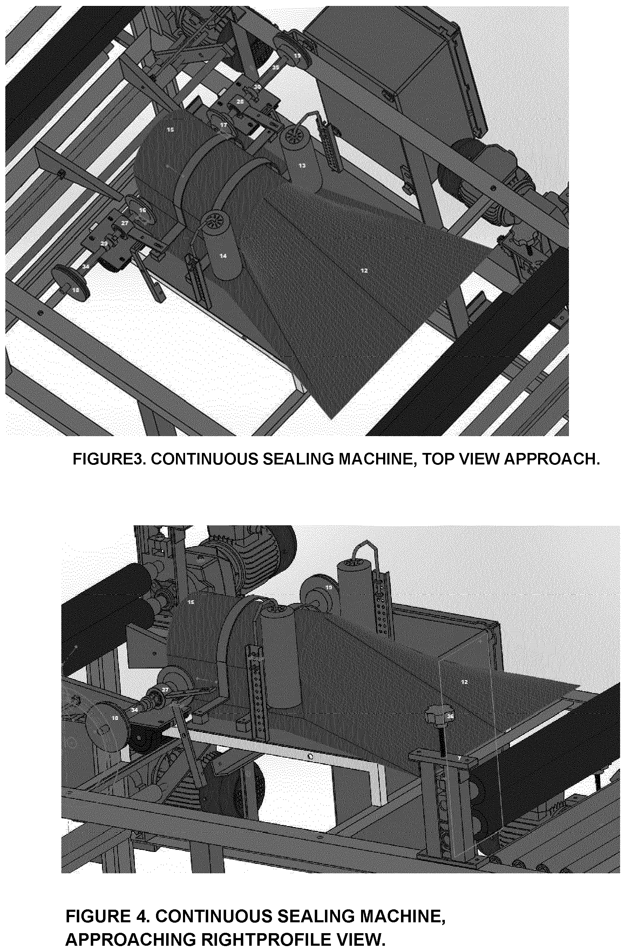

FIGURE 3. CONTINUOUS SEALING MACHINE TOP VIEW APPROACH. The figure shows the first part of the device (12), this part has the sheet on the arched tunnel, its ascending shape, its symmetries, its low coefficient of friction allow the sheet to move at high speeds and have an ideal behavior. In the arched tunnel (15) we can see the foil positioning rollers (13) and (14) and the sealing wheels (16) and (17). In the figure, the sheet positioning rollers are in a vertical position, although they are horizontally located during their operation. The sealing wheels are attached to a shaft (34) and (35), the supports of the wheels (27) and (28), the collector and the brushes (29) and (30) and the pulleys (18) can be seen and (19).

FIGURE 4. CONTINUOUS SEALING MACHINE APPROACHING RIGHT PROFILE VIEW. The figure shows the stainless steel arched tunnel (15), its height determined by the width of the films, the support of the sealing wheels with bearings (27), the axis of the sealing wheels (34) and (35) and pulleys (18) and (19). The assembly of the inlet pulling rollers (7) with pressure graduation screw (36) can be seen.

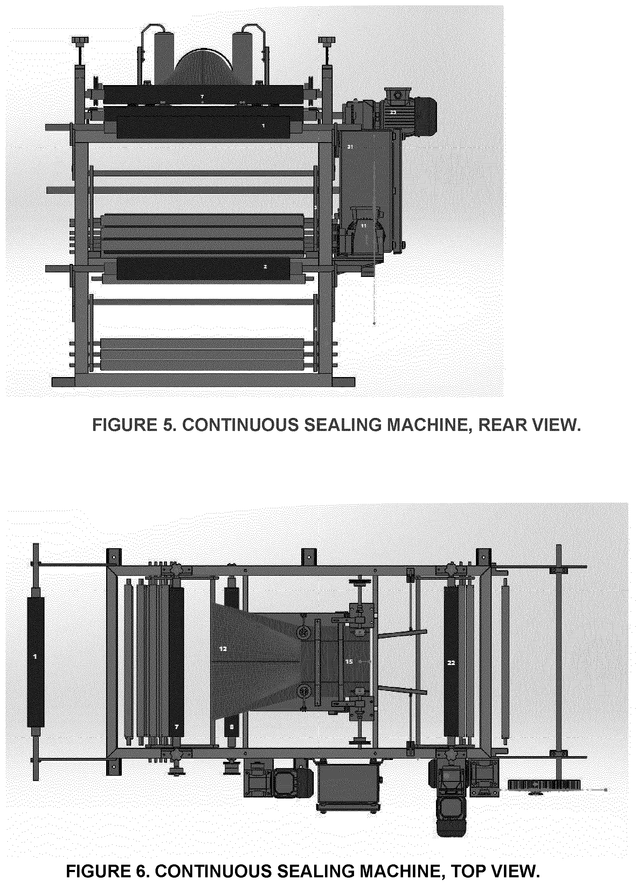

FIGURE 5. CONTINUOUS SEALING MACHINE REAR VIEW. The figure shows the unwinding bars (1) and (2) on divided bushings, the pendulum motion rockers (3) and (4) and the input pulling rollers (7) and (8).

FIGURE 6. CONTINUOUS SEALING MACHINE TOP VIEW. The figure shows the complete path of the films, the upper unwinder (1), the input pulling rollers (7) and (8), the input element of the special function device (12), the arched tunnel in stainless steel with flat spoilers and sealing windows (15) and the front pulling rollers (22).

## Claims

1. Continuous Sealing Machine for two Plastic Films, **characterized in that** it comprises the following parts: to. Main metallic structure with anchors **characterized by** an assembly of the following parts:
• inlet pulling rollers (7) and (8)
• front pulling rollers (22)
• guide rollers (5) and (6)
• rocker arms (3) and (4)
• supports for the parts
• mounts for motors.
b. Metal decoiler structure with anchors made up of:
• two mobile benches
• unwinder bars (1) and (2)
• supports for the parts.
The structure is **characterized by** its uncoupled position from the main structure due to the fact that the mobile benches produce vibration.
c. Single board of machine ignition **characterized by** an assembly of the following parts:
• machine ignition key
• manual starting of engines
• knobs and displays for engine speed
• ignition and indicator wheels temperature indicators.
d. Constant tension unwinders with rocker-controlled brakes made up of:
• unwinder bars (1) and (2),
• rocker arms (3) and (4)
• magnetic brakes.
The unwinders are **characterized in that** on the unwinder bars (1) and (2) the foil and tubular film reels with bellows are placed. The foil reel is placed on the constant tension unwinder with brake located at the top and the tubular reel with bellows is placed in the constant tension unwinder with brake located at the bottom. The rocker provides constant tension on the films in such a way that if the tension decreases, the brake on the reel is activated and if the tension increases, the brake reel is released, regulating the tension of the films at the entrance. and. Edge alignment system on the unwinding bars made up of:
• edge alignment sensors
• double turn motor. The system is **characterized in that** the edge alignment correction is made in benches that support the unwinder bars through transverse movements towards the side that is required by means of a double-turn motor and an endless attached to the bed to align. the edges of both films and thus guarantee that the edges of the sheet and the tubular coincide at the time of being sealed. The mobile bed has a roller at the height of the rollers on the upper plane of the rocker, which moves with the bed. Ahead of this roller is the edge alignment sensor. The sensors do not move with the bench. The sensor moves the bed to the right or left, maintaining the correct alignment of the films.
F. Feeding pulling roller system consisting of:
• vulcanized rubber rollers (7) and (8)
• mounting with bearings
• pressure graduation screw
The system is **characterized in that** it allows both plastic films to pass independently through feeder pulling rollers. These rollers have on the outside a layer of vulcanized rubber to continuously drag the films. There are two systems of pulling rollers, one for the sheet film and the other for the tubular film with bellows. They are located in the main structure (33), the inlet pulling rollers of the sheet are the upper pulling rollers and the inlet rollers of the tubular film with bellows are the lower pulling rollers, they maintain a constant feed of the films for later sealed.
g. Antistatic bars made up of:
• Inductive coupling
• Stainless steel electrodes on insulating material
Antistatic bars are **characterized by** eliminating static electricity from the material to be deionized. Antistatic bars produce positive and negative ions that neutralize those in the material. Static neutralization allows films to spread properly on the device.
h. Mechanism of sprockets and chain with motor made up of:
• upper pull roller sprocket (9)
• sprocket for the lower pulling rollers (10)
• chain for sprockets
• motor with independent speed control (11).
The mechanism is **characterized by** the main function of joining the upper feed pulling rollers (7) with the lower ones (8), which allows an identical speed between them. Traction is received from a single motor with independent speed control (11).
i. Special device made up of:
• Device input element (12)
• Stainless steel arch tunnel with flat ailerons and sealing windows (15)
• Bellows former The device is **characterized by** matching the edges of the films (37) at the time of being sealed and the behavior of the cold sheet for folding the bellows. Its location is from the upper pull rollers to the front pull rollers. The films are a sheet of width equal to the width of the bellows tubular plus four times the width of the bellows and a bellows tubular, the bellows tubular we will call the original tubular. It has three segments: The first segment (12) drives the sheet while giving it the shape of an arc or inlet element of the device, the second segment (15) is a stainless steel arched tunnel with flat ailerons and sealing windows where The films are sealed on both sides or central element of the device and the third segment is the element where the bellows of the new compartment or bellows former are formed.
j. Continuous sealing system consisting of:
• Bronze sealing wheels with resistors (16) and (17)
• Thermocouple and electric thermostat
• Collector and brushes system (29) and (30)
• Shaft of the sealing wheels (34) and (35)
• Support of the sealing wheels (27) and (28)
• Non-stick Teflon tape
• Damping system of the sealing wheels
• Pulleys of the sealing wheels (18) and (19)
• Camshaft of the sealing wheels
• Bases for senators and tubular guides
The system is **characterized by** having the main function of sealing the edges of the sheet and the tubular with bellows on both sides. The system allows the monitoring of the thermocouples by the electric thermostats in order to ensure optimal sealing. The sealing is done by sealing wheels attached to a shaft (34) and (35) that supports the sealing wheel (16) and (17) and rotates with the sealing wheel. It has three main parts. The first holds the sealing wheel, the second part carries inside the resistor cables that are connected to the collector that rotates together with the shaft. The third part supports the pulley of the sealing wheel (18) and (19) from where the wheels receive traction. The shaft is attached to a support (20) and (21) with a bearing that functions as a support for the parts. The support is an arm that has a pivot point, its second function is to raise the wheels by action of the camshaft.
k. Front pulling rollers made up of:
• two vulcanized rubber rollers (22)
• mounting on bearings with pressure setting screw (36)
• front pulling roller system stepper motor (23)
The system is **characterized by** having the main function of maintaining the speed and tension of the films during the sealing and shaping of the bellows. The system allows a stepper motor to advance in degrees while maintaining the speed of the films and thus performs the tension correction. If the voltage decreases, the current intensity also decreases in the motor supply.
To perform the voltage correction, the stepping motor is advanced a few degrees. As the voltage increases, the current intensity increases, making the respective correction. I. Clutch constant tension winders made up of:
• winder bars
• split bushings with safety lock
• stops with fixing pin
• motor with coupled gearbox
• electromagnetic clutch
The system is **characterized by** having the main function of maintaining constant tension in the two-compartment film winding. The system allows continuous work as it uses two winder motors with clutch, so that while one motor works the other rests.
The electromagnetic clutch couples the motor to the load. As long as the field assembly is fixed and is prevented from rotating, the rotor assembly is secured. When the coil is energized the armature positively connects the motor to the load, thus driving the load in high, medium and low speed. m. Two-sided printing module made up of:
• Metal frame
• Four guide rollers
• Single roller slide
• Servomotor
• Optical readers.
The system is **characterized by** having the main function of centering both prints, for which it uses a mobile roller that moves in the direction of the films on a metal frame.
Films, tubular with bellows and foil are printed. The module for printing on both sides matches the labels so that both prints are centered, for which it uses a movable roller within a four roller assembly one of the rollers moves in the direction of the films increasing or decreasing the travel and This way it locates the labels of both prints, a servomotor is used to adjust the position of the mobile roller and optical readers that locate the labels.

2. Machine of continuous sealing of two plastic films of two tracks of claim 1 **characterized in that** it also has: to. Balloon insufflation module for the formation of the bellows **characterized in that** it divides the tubular with a hot blade and seals it longitudinally, uses an arched support that contributes by rapidly cooling the films, fills the two tubulars with air with air guns and forms the bellows of the two tubulars. In the bellows forming tower, the upper pulling rollers ensure that the air does not escape from the balloons. The upper pull rollers have louvers that do not allow the balloons to move during the formation of the bellows.
b. Blade sharpening module **characterized in that** it divides the blade in two with a cold blade. It uses a grooved metal roller to support the blade.
c. Rotating guide rollers **characterized in that** their main function is to center the tubulars. The two bellows tubular films must be centered for which two rotating guide rollers are used in a mounted in such a way that they receive the films and project them outwards to obtain the displacement.
d. Divided rocker module **characterized by** allowing the input tension of the foil and tubular films with bellows to be equal in both tracks. and. Double width feed pulling rollers **characterized by** receiving the films in two tracks and supplying them to the stages of sealing and forming of the bellows.
F. Two special function devices **characterized by** having the main function of conditioning the films for sealing and forming the bellows in two tracks.
g. Double width front pulling rollers **characterized by** maintaining constant speed and tension during the two-track bellows forming and sealing stages.
and. Module of divided winders **characterized in that** each side has two motors with clutches. When one of the motors works the other rests. There are two engines for each track.
